# EUROPEAN PATENT SPECIFICATION

(11) **EP 4 001 828 B1**
(45) Date of publication and mention of the grant of the patent: **26.06.2024**
(21) Application number: 20208640.1
(22) Date of filing: 19.11.2020
(51) Int. Cl.: G01B 7/06

(54) **WEAR SENSOR AND METHOD OF SENSING WEAR**
VERSCHLEISSSENSOR UND VERFAHREN ZUR VERSCHLEISSERFASSUNG
CAPTEUR D'USURE ET PROCÉDÉ DE DÉTECTION D'USURE

(43) Date of publication of application: 25.05.2022
(60) Divisional application: 24174805.2
(73) Proprietor: Metso Finland Oy, 02230 Espoo (FI)
(72) Inventor: Frizell, Nigel, Wanneroo, Western Australia 6065 (AU)
(74) Representative: Hoffmann Eitle

(56) References cited:
- AU-A4- 2018 101 067
- CN-U- 204 113 978
- JP-U- S5 951 229
- Anonymous: "Shift register - Wikipedia", , 18 October 2019 (2019-10-18), XP055806641, Retrieved from the Internet: URL:https://en.wikipedia.org/w/index.php?t itle=Shift_register&oldid=921827319 [retrieved on 2021-05-21]

## Description

### Technical Field

The present invention relates to a wear sensor and a method for sensing wear occurring to an object. The present invention further relates to a wear sensing system comprising the wear sensor and a measuring device for measuring an amount of wear occurring to the object.

### Background

Plant and equipment in many industries are subject to wear by the passage or flow of abrasive materials. For example, in mining, ore may be passed through chutes onto conveyors for subsequent processing. These chutes are subject to substantial wear by the passage of large, heavy, and hard rocks. To extend the service life of such plant and equipment, it is known to fix sacrificial wear plates or wear liners to the surfaces which would otherwise be in contact with the abrasive material. Irrespective of whether or not wear plates are used, in order to optimally manage and maintain the plant and equipment, it is common practice to monitor for wear. This may be done by the use of wear sensors, in particular in situations in which manual inspection is physically impossible or requires substantial down time.

US 2012/043980 A1 describes a wear sensor having an electrical circuit comprising a plurality of discrete elements (resistors), wherein each of the discrete elements has a nominal electrical characteristic (e.g. the same resistance, or capacitance or inductance) and thus contributes to a measurable electrical characteristic of the circuit. Each discrete element is being capable of being electrically decoupled (i.e. disconnected) from the electrical circuit by action of wear on the sensor. As such, when wear occurs on the sensor and one or more of the discrete elements are electrically decoupled, a change in the measurable electrical characteristic of the entire electrical circuit occurs and the measured change indicates an amount of wear. However, measuring the overall electrical characteristic of the electrical circuit alone may not indicate a sensor fault, i.e. distinguish between a scenario when a resistor failure to contribute to the overall electrical characteristic is due to the resistor being worn away or due to another problem of the resistor.

WO 2020/061634 describes a wear sensor for use in a wear sensing fastener. A circuit is shown having resistors and Zener diodes for measuring wear. However, with the Zener diodes based design due to the nature of diodes, the voltage over the electrical circuit is proportional to the number of Zener diodes. This means that as the number of Zener diodes gets larger, the voltage highly increases. Thus, it is difficult to effectively generate the required voltage from a typical battery which may requires a step-up circuit. In other words, the use of Zener diodes in an electrical circuit of a wear sensor requires a higher voltage than a typical battery can provide and therefore would require step up convertor and constant current source. As a result, a Zener diodes based design limits the practical number of elements involved. For example, in a Zener diodes based design, a breakdown voltage of 1.8 V and 70 Zener diodes for the wear sensor requires a supply voltage of 1.8 V x 70 = 126 V. This means that there is a practical upper limit. In addition, biasing the Zener diodes leads to increased current leading to a higher power consumption with negative effects on battery life.

Anonymous: "Shift register - Wikipedia", 18 October 2019 (2019-10-18),
Retrieved from the Internet: URL:https://en.wikipedia.org/w/index.php? title=Shift_register&oldid=921827319 describes shift registers in general.

AU 2018 101 067 A4 relates to a wear plate sensor for a sacrificial member such as a wear liner, including a circuit board having a plurality of printed tracks thereon. Each of the tracks are connected to discrete inputs of a microcontroller or I/O chip on or adjacent the circuit board to thereby generate a binary number. The printed tracks are sequentially severable by wear of the sensor, such that the binary number of the microcontroller or I/O chip is altered.

CN 204 113 978 U relates to a fault display device of a brake wear switch. The fault display device comprises a brake wear signal detection device, a power supply module, a photoelectric coupler and a plurality of micro switches, wherein each micro switch is in series connected with a fault display lamp by the brake wear signal detection device of the photoelectric coupler. Each micro switch is in series connected with one fault display lamp. When the brake wear extent is beyond the limit, the switch status is changed, namely the normally open contact of the brake wear travel switch is closed. Thus, the fault display lamp in series connected is lightened for displaying that the fault is occurred by some micro switch, such that the serviceman can quickly find out the disc-shaped brake with the fault and repairs and maintains it to timely and effectively solve the problem.

JP S59 51229 U relates to a wear detector having a detector whose circuit is opened at the wear limit of a wear detector. The wear detector comprises a starter switch connected to an alarm indicator circuit such as a lamp, and a detector terminal connected to a base terminal of a transistor provided in the circuit.

### Summary of the Invention

### Technical Problem

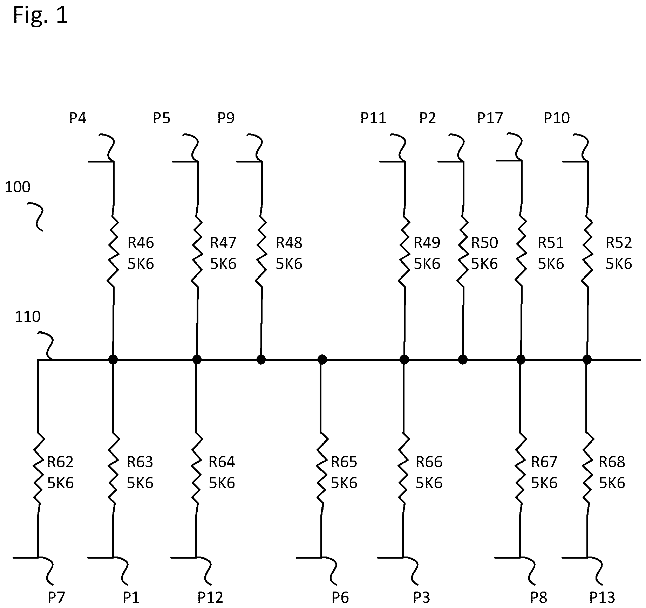

To better indicate wear sensor fault, e.g. to better distinguish between a scenario when a resistor failure to contribute to the overall electrical characteristic is due to the resistor being worn away or due to another problem of the resistor, an electrical circuit as shown in Fig. 1 may be used in which each resistor is individually probed. Fig. 1 shows a conventional resistor-based electrical circuit comprising a plurality of resistors being aligned along one track.

The electrical circuit 100 shown in Fig. 1 has a common track 110 for all resistors R46 to R52 and R62 to R68 and individual line tracks P1 to P13 and P17 for each resistor. Instead of resistors, capacitors, tracks, diodes, or the like may be used. According to the electrical circuit 100 in Fig. 1, each resistor is sequentially energised in turn (e.g. via line track P7 for resistor R62) and the voltage across all other resistors is measured sequentially. Further, such voltage measurements are used, for example in an algorithm, to determine whether an individual resistor is missing (due to wear), is short circuited, or is out of tolerance.

Such an electrical circuit for a wear sensor has, however, the following technical problems. A typical wear sensor would, for example, be equipped with 70 resistors which have to be individually probed in sequence. The overall measurement time is thus rather long (e.g. for a wear sensor with 70 resistors, the overall measurement time is about 0.6 seconds). The skilled person recognizes that a break in the common line irreversibly affects all measurements and the wear sensor becomes unusable as there is no redundancy. Further, the electrical circuit does not easily scale due to the number of required tracks (common line plus individual line tracks (e.g. 70) for each resistor) and adds complexity as one analogue to digital converter or the like is required per resistor. Typically, providing such an amount of analogue to digital converters for a sensor requires more than one programmable interface controller (PIC) or the like which increases the manufacturing costs and/or firmware requirements.

There is thus a need to address these technical problems associated with wear sensors having the above resistor-based design as shown in Fig. 1. These technical problems should be addressed in a way that avoids higher power consumption requirements as in the Zener diodes based design of WO 2020/061634.

### Solution

The present invention is defined by the appended independent claims. Further preferred embodiments are defined by the dependent claims.

According to an aspect, a wear sensor comprises an electrical circuit comprising a sequence of discrete elements, each discrete element being capable to temporarily hold a digital data value, wherein the electrical circuit is configured to sequentially transfer or shift the digital data value from a first discrete element on a first side of the wear sensor to subsequent discrete elements toward a second side of the wear sensor. Each discrete element is capable of being electrically decoupled from the electrical circuit, sequentially in a direction from the second side by action of wear on the wear sensor, wherein a number of discrete elements in the sequence is reduced when wear occurs on the wear sensor.

According to another aspect, a method for sensing wear occurring to an object comprises sequentially transferring a digital data value from a first discrete element on a first edge of a wear sensor to subsequent discrete elements toward a second edge of the wear sensor. The wear sensor comprises an electrical circuit, the electrical circuit comprises a sequence of discrete elements, each discrete element temporarily holding the digital data value, and a discrete element is electrically decoupled from the sequence of discrete elements, sequentially in a direction from the second edge, by action of wear on the wear sensor, wherein a number of discrete elements in the sequence is reduced when wear occurs on the wear sensor.

According to another aspect, a wear sensing system comprises one or more wear sensors and a measuring device configured to measure an amount of wear occurring to an object based on the one or more wear sensors.

According to another aspect, equipment subject to wear comprises a wear sensor.

### Brief Description of the Drawings

Embodiments of the present invention, which are presented for better understanding the inventive concepts and which are not to be seen as limiting the invention, will now be described with reference to the Figures in which:
Fig. 1 shows a conventional resistor-based electrical circuit comprising a plurality of resistors being aligned along one track.
Figs. 2A and 2B shows a wear sensor comprising an electrical circuit according to an embodiment.
Fig. 3 shows a cross section of an exemplary setup of a chute and a conveyor used in mining, wherein a wear sensor according to an embodiment is installed.
Figs. 4A and 4B show electrical circuits of a wear sensor having a number of flip-flop elements as discrete elements according to an embodiment.
Fig. 5 shows an exemplary signal-time diagram for a D flip-flop element.
Fig. 6 shows an electrical circuit of a wear sensor on a substrate according to an embodiment.
Fig. 7A shows an electrical circuit and its output over a sequence of flip-flop elements according to an embodiment.
Fig. 7B shows signal-time diagrams with regard to Fig. 7A.
Figs. 8A and 8B show printed circuit board designs in combination with wear sensors.
Fig. 9 shows electrical circuits of a wear sensor on a substrate according to an embodiment.
Fig. 10 shows a method for sensing wear occurring to an object according to an embodiment.
Fig. 11 shows a wear sensing system according to an embodiment.

### Detailed Description

The mechanism(s) described above and in more detail below solve technical problems that arise with regard to conventional wear sensors. It is desired to provide a wear sensor that is capable of accurately and steadily measuring wear occurring to an object, wherein measurement failures due to sensor outage should be avoided and the measurement time should be reduced. Furthermore, it is desired to provide an easily scalable wear sensor having small dimension.

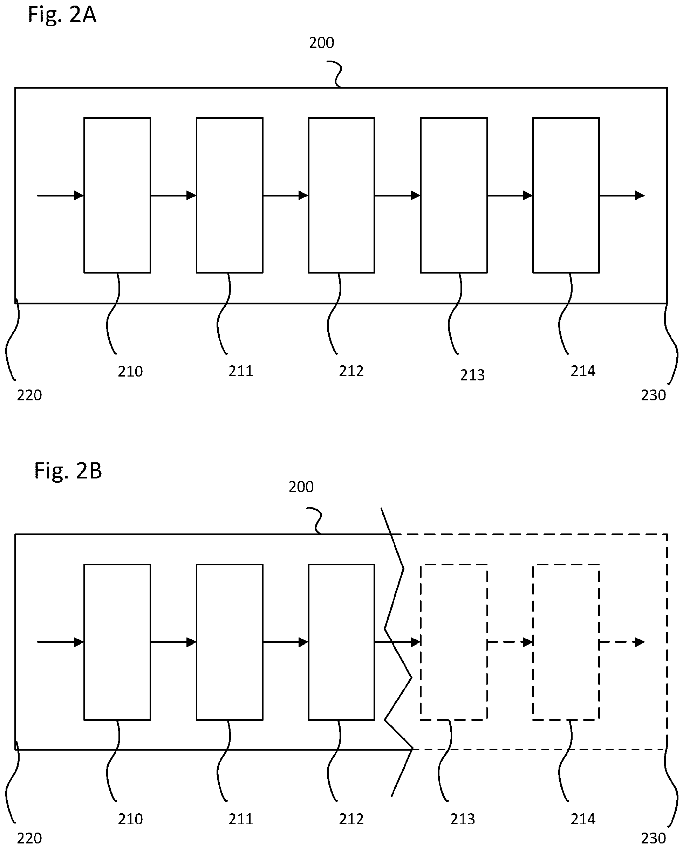

Fig. 2A shows a wear sensor comprising an electrical circuit according to an embodiment. The wear sensor 200 may comprise an electrical circuit, wherein the electrical circuit may comprise a sequence of discrete elements, for example discrete elements 210, 211, 212, 213, and 214 in Fig. 2A. The wear sensor 200 is not limited to five discrete elements but may comprise more or less discrete elements depending on a desired size of the wear sensor 200. Each discrete element 210, 211, 212, 213, and 214 may be capable to temporarily hold a digital data value, such as "1", wherein the electrical circuit may sequentially transfer or shift the digital data value from a first discrete element 210 on a first edge 220 of the wear sensor 200 to subsequent discrete elements 211, 212, 213, and 214 toward a second edge 230 of the wear sensor 200. The digital data value of "1" may be represented by a first voltage at the discrete element. By comparison, the digital data value of "0" may be represented by a second voltage at the discrete element, the second voltage being lower than the first voltage.

Temporally holding a digital data value means to temporarily store the digital data value by a discrete element. Sequentially transferring or shifting the digital data value means to outputting a digital data value temporarily stored in a first discrete element and transmitting the outputted digital data value to a subsequent second discrete element which is connected to the first discrete element, wherein the second discrete element may then store the transmitted digital data value. The first edge 220 may indicate one end of the wear sensor 200 and the second edge 230 may indicate another end of the wear sensor 200.

Each discrete element 210, 211, 212, 213, and 214 may be capable of being electrically decoupled from the electrical circuit, sequentially in a direction from the second edge 230 by action of wear on the wear sensor 200, wherein a number of discrete elements in the sequence is reduced when wear occurs on the wear sensor 200. For example, each discrete element is capable of being electrically decoupled from the electrical circuit, sequentially in a direction from the second edge 230 towards the first edge 220 by action of wear on the wear sensor 200. When a discrete element is electrically decoupled from the electrical circuit, the discrete element may be disconnected from the sequence of discrete elements, thus reducing the number of discrete elements which exist in the sequence of discrete elements. This number may be 1, 2 (as shown in Fig. 2B), or a larger number if a larger amount of wear occurs.

Fig. 2B again shows a wear sensor according to an embodiment, wherein wear occurs to the wear sensor. The wear sensor 200 of Fig. 2B is the same wear sensor as shown in Fig. 2A and comprises an electrical circuit with initially five discrete elements 210, 211, 212, 213, and 214. Due to wear occurring to the wear sensor 200, two discrete elements 213 and 214 are electrically decoupled from the electrical circuit meaning that the discrete elements 213 and 214 are disconnected from the sequence of discrete elements. Thus, the number of discrete elements in the sequence of discrete elements decreases from initially five discrete elements to three discrete elements.

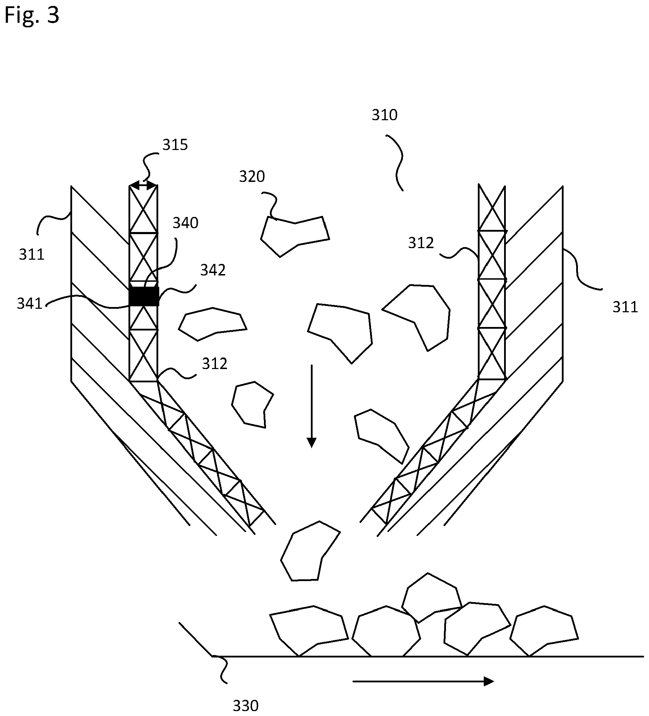

Fig. 3 shows a cross section of an exemplary setup of a chute and a conveyor used in mining, wherein a wear sensor according to an embodiment is installed. In Figure 3, a chute 310 having a wall 311 and a conveyor 330 are shown, wherein rocks 320 of different sizes and shapes fall through the chute 310 and are passed onto the conveyor 330 to be transported for subsequent processing. For example in mining, ore may be passed through the chute 310 onto conveyor 330 for subsequent processing. However, due to the heavy and hard rocks 320 falling through the chute 310, the chute 310 is subject to substantial wear.

In order to protect the wall of the chute 310, a plurality of wear liners or wear plates 312 (examples of equipment subject to wear) of thickness 315 may be installed onto the chute wall 311 which can be replaced or repaired more easily than the chute wall 311. These wear plates 312 may be of different size and can be replaced independently of each other depending on the amount of wear. However, it may be possible to also install only one wear plate 312 which is large enough to cover the whole chute wall 311. When wear occurs to the wear plate 312 due to the heavy and hard rocks 320 being passed through the cute 310, the thickness 315 of the wear plate 312 may be decreased.

Thus, in order to be able to accurately and continuously measure wear occurring to the wear plates 312 without having to stop the mining process, a wear sensor 340 may be installed in the wear plate 312. By means of the wear sensor 340, it is possible to accurately and continuously measure wear of the wear plate 312, i.e. measure the decrease of thickness of the wear plate 312 due to the rocks 320 passing through the chute 310. If no wear plates are used, the wear sensor 340 may be installed directly in the wall 311 of the chute 310.

The wear sensor 340 may be installed in a direction of the thickness of the wear plate 312 in such a way that the first edge 341 of the wear sensor 340 is directed outward of the chute 310 and the second edge 342 is directed inward of the chute 310. Thus, when the chute 310 is worn, in particular the wear plates 312, and the thickness 315 of the wear plates 312 decreases, at least one discrete element in the wear sensor 340 may be electrically decoupled from the electrical circuit of the wear sensor 340, sequentially in a direction from the second edge 342 towards the first edge 341 by action of wear on the wear plates 312 and thus also on the wear sensor 340. Thus, the number of discrete elements in the sequence of discrete elements of the wear sensor 340 may be reduced when wear occurs to the wear plates 312 and thus also on the wear sensor 340.

According to an embodiment, the reduced number of discrete elements in the wear sensor 340 may indicate an amount of wear. For example, the reduced number of discrete elements indicates the remaining thickness 315 of the wear plates 312. For example, as also shown in Fig. 2B, if two discrete elements are electrically decoupled, then based on the preset spacing or distance between the discrete elements, the remaining or reduced number of discrete elements in the wear sensor is known and the remaining thickness of the wear equipment (such as wear plate 312) can be determined by subtracting from the initial thickness 315 the total length of the two decoupled discrete elements. The overall or total length related to the decoupled discrete elements may be obtained by considering the sizes (physical extension) of the decoupled discrete elements plus the distance between the discrete elements. The amount of wear may be based on the total length related to the number of decoupled discrete elements. If a large amount of wear has occurred to the wear plates 312, i.e. when the amount of wear is above a specific threshold, the mining process may be stopped to provide appropriate measures, for example replace or repair the respective wear plates 312. Thus, damages regarding the chute 310 can be avoided.

In other words, the amount of wear may be obtained from the difference between the initial thickness 315 of the wear equipment before wear occurs (e.g. after the wear equipment has been installed) and the remaining thickness 315 after wear has occurred, wherein the thickness 315 may be reduced significantly when a large amount of wear has occurred. For example, the thickness 315 can be compared to a specific threshold and if the thickness 315 is below the specific threshold (meaning that the amount of wear is above the specific threshold), the mining process is stopped. Thus, during a phase where no rocks 320 pass through the chute, the wear plates 312 can be repaired or replaced. Thus, the wear occurring to the chute 310 can be measured continuously without having to stop the mining process during measurement, wherein the mining process only has to be stopped when the amount of wear is above a specific threshold and, for example, repair measures are necessary.

As explained above, the wear sensor may comprise discrete elements which temporally hold a digital data value and are able to transfer or shift the digital data value to a subsequent discrete element of the wear sensor. The wear sensor according to an embodiment of the present invention does not comprise a plurality of resistors as described with regard to Fig. 1 but a plurality of discrete elements which are capable to temporarily store digital data values (such as at least two different voltages representing the digital data values of "0" and "1") and thus does not require an analogue to digital converter, a sensing circuit, a detection circuit, or the like per discrete element. As discrete elements are used and analogue digital converters or the like are not needed, the number of tracks needed in the electrical circuit of the wear sensor and the dimension of the wear sensor can be reduced and the wear sensor can be easily scaled. Furthermore, the measurement time is reduced when measuring the wear compared to resistor-based wear sensors. By reducing the measurement time, battery power of the wear sensor can be saved. Thus, the battery life of the wear sensor battery is prolonged due to faster measurements. In addition, the wear sensor may be powered by a battery or battery pack as such, that is without the need of step-up converters or the like to increase the voltage over the voltage that the battery provides.

According to an embodiment, the electrical circuit of the wear sensor can be directly installed onto the object or equipment whose amount of wear should be measured. As described above, the object or equipment may be a wear plate or wear liner. According to another embodiment, the wear sensor may further comprise a substrate, wherein the electrical circuit may be supported by the substrate. The substrate may be disposed along a path subject to wear. For example, the substrate is a thin material of any suitable type, wherein the electrical circuit of the wear sensor is mounted onto the substrate. The substrate having the electrical circuit may then be placed on the object subject to wear. For example, with regard to Fig. 3, the substrate having the electrical circuit of the wear sensor 340 is provided in the wear plate 312 mounted onto the chute wall 311 to measure the amount of wear of the wear plate 312 occurring due to the rocks 320 passing the chute 210.

According to another embodiment, the discrete elements of the wear sensor may be placed or connected in series, i.e. consecutively, on the substrate, wherein the discrete elements of the wear sensor may be sequentially decoupled from the substrate as a wear progresses along the path. Again, the path is the direction of wear, for example a path along the thickness of a wear plate 312 as described with regard to Fig. 3.

The discrete elements may be equally (or substantially equally) spaced in the electrical circuit or on the substrate. By equally (or substantially equally) spacing the discrete elements, the accuracy of the determination of the amount of wear occurring to an object or equipment can be improved and the calculation or measurement of the amount of wear can be facilitated. By increasing the number of discrete elements on a fixed length of the wear sensor, the accuracy may increase. When the number of discrete elements that were electrically decoupled from the electrical circuit by action of wear on the wear sensor is known, the number of decoupled discrete elements can be converted to a measure of length based on a preset distance or spacing between the discrete elements. For example, if three discrete elements were electrically decoupled and the discrete elements are equally spaced with a spacing of 1 mm, the number of three decoupled discrete elements can be converted to approximately 2 mm of wear or any other measure of length. Thus, once the amount of wear, for example represented by a measure of length, is above a threshold, repair or replacement measures can be performed with regard to the object subject to wear. It may be also possible to convert the amount of wear into a percentage measure, wherein repair or replacement should be performed when the amount of wear in percentage is above a threshold, for example, if more than 70% of a wear sensor (and thereby of a wear plate) is gone.

However, according to another embodiment, it is also possible that the discrete elements are not equally spaced in the electrical circuit or on the substrate. For example, the discrete elements may be spaced in an exponential or polynomial way. Even though the discrete elements are not equally spaced in the electrical circuit or on the substrate, the amount of wear can still be determined. For example, it is possible to arrange the discrete elements with smaller spacing in the direction of the first edge of the wear sensor and arrange the discrete elements with larger spacing in the direction of the second edge of the wear sensor; thus increasing the resolution and accuracy of wear detection in the direction of the first edge. In this case, a conversion from a number of discrete elements electrically decoupled from the electrical circuit to an amount of wear is based on a variance in spacing between the discrete elements.

According to an embodiment, the discrete elements may be flip-flop elements and the sequence of flip-flop elements may be a flip-flop array or shift register. A flip-flop element may have two stable states and can be used to store or hold state information or a digital data value, like 0 or 1 (represented by two different voltage values). A flip-flop element may be a device which stores or holds a single bit (binary digit) of data; one of its two states or bits represents a "1" and the other represents a "0". The flip-flop element may be a clocked device, wherein such a clocked device may ignore its inputs except at the transition of a dedicated clock signal. The clock signal causes the flip-flop element either to change or to retain (hold) its output signal based upon the values of the input signals at the transition.

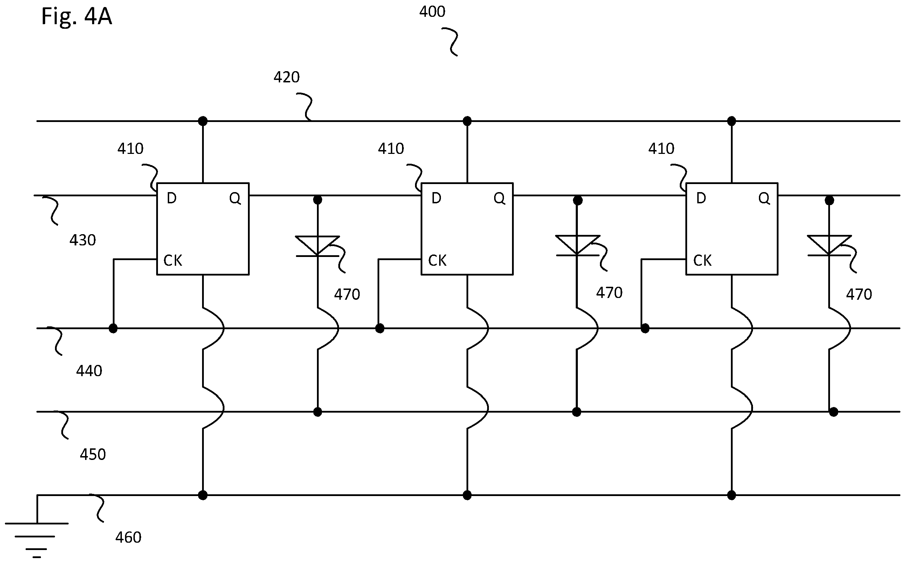

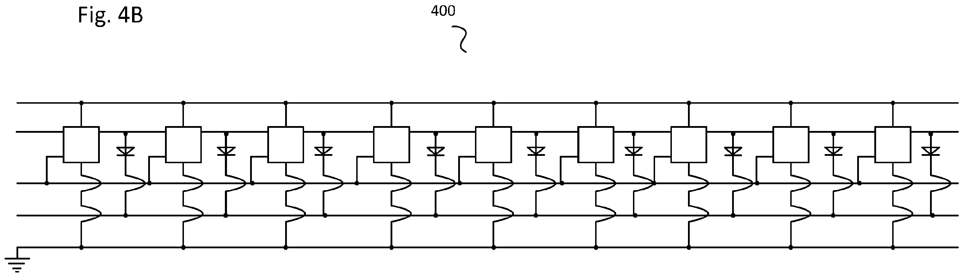

Figs. 4A and 4B show electrical circuits of a wear sensor having a number of flip-flop elements as discrete elements according to an embodiment. The electrical circuit 400 shown in Fig. 4A comprises three flip-flop elements 410, but this is not limiting. For example, as shown in Fig. 4B, the electrical circuit 400 may comprise more flip-flop elements, like nine flip-flop elements. Thus, the electrical circuit may also comprise more or less flip-flop elements 410 depending on the dimension of the equipment subject to wear. For example, up to 70 flip-flop elements or even up to 256 flip-flop elements may be connected for a wear sensor.

The electrical circuit 400 shown in Fig. 4A or 4B comprises flip-flop elements 410, wherein the flip-flop elements 410 may be D flip-flop elements. A D flip-flop element is known as "data" or "delay" flip-flop element which captures the digital data value of the data input (D-input) at a definite portion of a clock cycle, such as the rising edge of a clock signal (CK). The captured digital data value which may be "1" or "0" then becomes the output Q. At other times during the clock cycle, the output Q does not change. The D flip-flop element can be viewed as a memory cell, a delay line, or the like. The digital data value to be stored by the flip-flop element may be "1" if a first amount of voltage is applied to the flip-flop element. For example, the digital data value to be stored is "1", if voltage between 2.4V to 5V is applied to the flip-flop element. Further, the digital data value to be stored may be "0" if a second amount of voltage is applied to the flip-flop element. For example, the digital data value to be stored is "0", if voltage between 0V to 0.4V is applied to the flip-flop element.

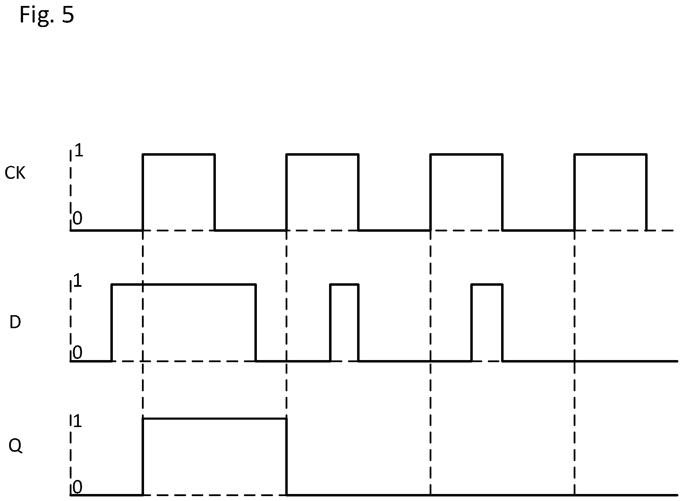

Fig. 5 shows an exemplary signal-time diagram for a D flip-flop element. The upper diagram in Fig. 5 shows a clock signal CK over time, wherein the clock signal represents a digital data value of "0" if the signal ("voltage") amplitude is low, and a digital data value of "1" if the signal ("voltage") amplitude is high. The middle diagram in Fig. 5 shows a data signal D over time, wherein the data signal represents a digital data value of "0" if the signal ("voltage") amplitude is low, and a digital data value of "1" if the signal ("voltage") amplitude is high. The lower diagram in Fig. 5 shows an output signal Q over time, wherein the output signal represents a digital data value of "0" if the signal ("voltage") amplitude is low, and a digital data value of "1" if the signal ("voltage") amplitude is high.

As shown in Fig. 5, the D flip-flop elements only captures the digital data value of the data signal D at the rising edge of the clock signal CK, wherein the captured digital data value becomes the output signal Q. At the falling edge of the clock signal CK or at any time of the clock signal CK other than the rising edge, the digital data value is hold or stored and the output signal remains unchanged until the next rising edge of the clock signal arrives. This can be seen when comparing the diagram of the input signal D in Fig. 5 with the diagram of the output signal Q, wherein the first digital data value of "1" of the input signal D becomes the output signal Q, but the second and third digital data values of "1" of the input signal D do not become the output signal Q, because they do not occur at rising edges of the clock signal.

When a sequence of flip-flop elements is provided, see also Figs. 4A and 4B, the sequence of flip-flop elements may function as a shift register. A shift register may be a cascade of flip-flop elements, sharing the same clock (CK), in which the output Q of each flip-flop element is connected to the data input D of the next flip-flop element in the chain, i.e. in the sequence, resulting in a circuit that shifts by one position the digital data value or "bit array" stored in it. In other words, the data present at its input is "shifted in" the flip-flop element and the last bit in the bit array is "shifted out" of the flip-flop element, at each transition of the clock input or clock signal. As also shown in Figs. 4A and 4B, the flip-flop elements 410 shift their digital data value, i.e. their memory content, forward at each clock cycle. Shifting forward means that the flip-flop elements 410 either shift their digital data value to a subsequent flip-flop element or out of the shift register (i.e. out of the electrical circuit) if the flip-flop element is at the end of the sequence of flip-flop elements.

The electrical circuit 400 may comprise a specific amount of tracks or lines, wherein the specific amount of tracks or lines is independent of the total number of discrete elements (flip-flop elements) included in the sequence. Thus, the dimension of the electrical circuit and the wear sensor can be minimized, as the number of tracks necessary for the electrical circuit does not increase when the number of discrete elements (flip-flop elements) is increased. Thus, the electrical circuit and the wear sensor can be easily scaled, i.e. the number of discrete elements may be easily changed without the need for further tracks, analog to digital converters or the like.

For example, as also shown in Figs. 4A and 4B, the electrical circuit comprises five tracks or lines, wherein the five tracks are a track 420 for a power signal, a track 440 for a clock signal, a track 430 for an input signal, a track 450 for an output signal, and a track 460 connected to ground. The input signal may be the data signal D, the output signal may be the output signal Q, and the clock signal may be the clock signal CK, as described with regard to Fig. 4. To have a well-functioning electrical circuit, power needs to be applied to the flip-flop elements via track 420 and the flip-flop elements need to be connected to ground via track 460.

According to an embodiment, the output Q of each flip-flop element 410 may be further connected to a diode 470, as shown in Figs. 4A and 4B, or to any other element having similar functionalities. However, this is not necessary and the electrical circuit 400 may not comprise any diodes. The diode 470 may be configured in such a way that if the output signal (output Q) of the flip-flop element represents a digital data value of "1", i.e. relates to a first amount of voltage of, for example, 2.4V to 5V, the diode 470 lets current pass through to the track 450. For example, the diode 470 is a Si-diode (silicon diode) which lets current pass at a voltage of higher than 0.4 V.

Furthermore, the diode 470 may be configured in such a way that if the output signal (output Q) of the flip-flop element represents a digital data value of "0", i.e. relates to a second amount of voltage of, for example, 0V to 0.4V, the diode 470 does not let current pass through to the track 450. For example, the diode 470 is a Si-diode (silicon diode) which does not let current pass at a voltage below 0.4 V.

A measuring device (not shown) may be connected to track 450 and may measure or detect a voltage value or current value at track 450. By measuring or detecting a voltage or current value at track 450, the measuring device can detect whether a digital value of "1" is still present in the sequence of flip-flop elements and can thus determine an amount of wear (as will be further explained below). In combination with the clock, the measuring device can further determine which flip-flop element currently outputs the digital data value of "1". This is described in more detail below. By providing diodes 470, it is possible to provide more accurate wear measurements, as the diodes 470 only let current pass at high voltage while blocking at small erroneous voltages.

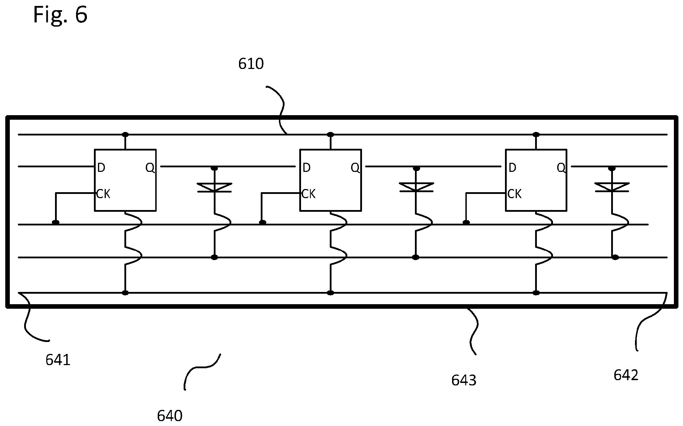

Fig. 6 shows an electrical circuit of a wear sensor on a substrate according to an embodiment. The wear sensor 640 may be the wear sensor 200 of Figs. 2A and 2B or the wear sensor 340 of Fig. 3 which comprises a substrate 643. Embodiments of a substrate has been explained above, wherein the substrate may be a thin material of any suitable type. The substrate 643 may be positioned in a chute or a wear plate, for example as shown in Fig. 3, in the direction of the thickness of the wear plate to detect wear occurring to the wear plate due to, for example, heavy and hard rocks. On the substrate 643, an electrical circuit 610 may be placed. The electrical circuit 610 may be an electrical circuit as described with regard to Figs. 2A and 2B or Figs. 4A and 4B. A first edge 641 of the wear sensor (non-affected side of the wear sensor) may be directed outward of the chute or any other equipment subject to wear, as also shown in Fig. 3, and a second edge 642 of the wear sensor (affected side of the wear sensor) may be directed inward of the chute or any other equipment subject to wear. In other words, the second edge 642 may have immediate contact with material, elements, objects, or the like, for instance rocks, which cause wear to the wear sensor and thereby affects the number of discrete elements. The second edge 642 of the wear sensor being directed inward may be subject to wear, wherein a flip-flop element towards the second edge 642 may be electrically decoupled from the electrical circuit in the direction of the first edge 641 by action of wear occurring to the wear sensor.

According to an embodiment, the amount of wear may be determined based on a number of clock transitions between the flip-flop elements in the sequence until the output over the sequence of flip-flop elements is a digital data value of zero ("0"), and preferably remains zero over a specific number of clocks. The output may have a digital data value of one ("1") as long as a digital data value of one ("1") is present in the sequence of flip-flop (and is therefore hold in the electric circuit).

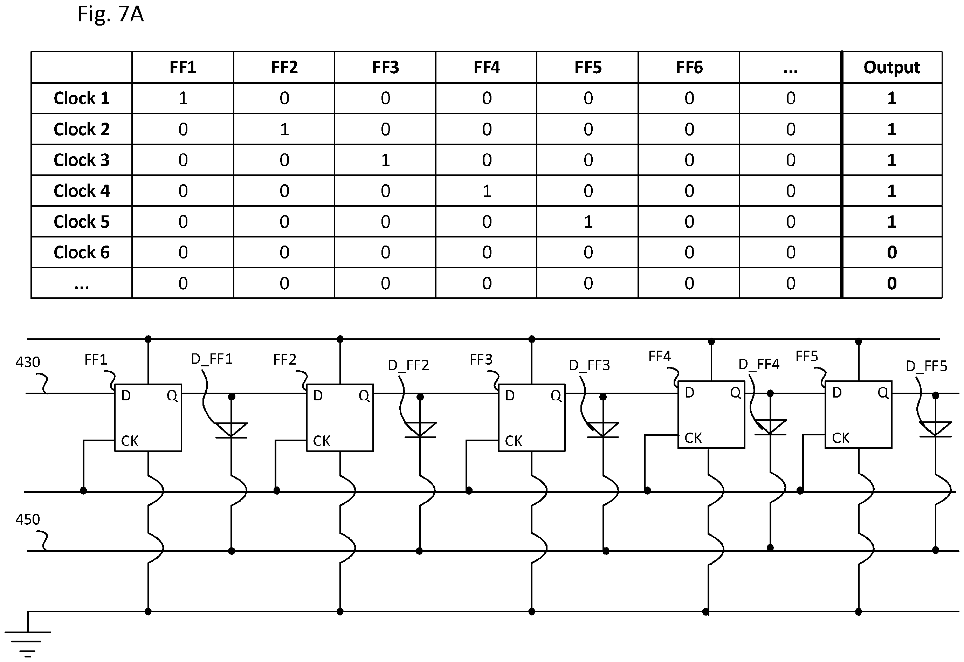

Fig. 7A shows an electrical circuit and its output over a sequence of flip-flop elements according to an embodiment. The electrical circuit comprises five flip-flop elements, wherein "FF1", "FF2", "FF3", "FF4", and "FF5" represent a first flip-flop element FF1, a second flip-flop element FF2, a third flip-flop element FF3, a fourth flip-flop element FF4, and a fifth flip-flop element FF5, the five flip-flop elements being connected as sequence of flip-flop elements. Furthermore, the electrical circuit comprises five diodes D_FF1, D_FF2, D_FF3, D_FF4, and D_FF5.

In Fig. 7A, an input signal representing a digital data value of "1" is sent at track 430 which is detected or captured by the first flip-flop element FF1, in particular by the input D of FF1, at clock 1, for example at the rising edge of clock 1. Thus, the output Q of FF1 is "1" and the diode D_FF1 lets current pass through to track 450, as explained above. In other words, diode D_FF1 after the flip-flop element FF1 sends a high output signal representing a digital data value of "1" to the output of the electrical circuit via track 450. The amplitude of the signal sent by D_FF1 may be slightly reduced compared to the signal of output Q but may still be regarded as high output signal representing a digital data value of "1". For all other flip-flop elements FF2 to FF5, the input D at clock 1 is low, i.e. the input D has a digital data value of "0" at clock 1. Thus, flip-flop elements FF2 to FF5 have a digital data value of "0" at the output Q and the diodes D_FF2 to D_FF5 block. When the diodes block, no current is passed through. Thus, the output over the sequence of flip-flop elements FF1 to FF5, i.e. the overall output over the electrical current of the wear sensor amounts to the digital data value of "1". A measuring device (not shown) or any other device capable of measuring an amount of wear may be connected to the track 450 and may detect or measure current that is passed through the diodes D_FF1 to D_FF5.

For the next clock 2, the digital data value "1" is shifted from flip-flop element FF1 to flip-flop element FF2. Thus, at clock 2, the output Q of FF1 is "0" while the output Q of FF2 is "1". For the remaining flip-flop elements FF3 to FF5, the output Q is also "0". Thus, the output over the sequence of flip-flop elements FF1 to FF5 again amounts to the digital data value of "1" due to the digital data value "1" output by FF2. In this context, the diode D_FF2 lets current pass through to track 450 while the other diodes D_FF1 and D_FF3 to D_FF5 block.

The above procedure is also repeated for FF3, FF4, and FF5.

However, at clock 6 and all subsequent clocks, if any, the output over the sequence of flip-flop elements FF1 to FF5 now changes to "0". This is due to the fact that the electrical circuit only comprises five flip-flop elements and flip-flop element FF5 shifts the digital data value of "1" out of the electrical circuit at clock 6.

The electrical circuit may only comprise five flip-flop elements or may have comprised more than five flip-flop elements during manufacturing, wherein the flip-flop elements after FF5 were electrically decoupled by action of wear on the wear sensor. As the digital data value of "1" at clock 6 and all subsequent clocks is no longer present in the sequence of flip-flop elements FF1 to FF5, the output over the sequence of flip-flop elements becomes zero. In other words, no current is transferred via the track 450 because all diodes D_FF1 to D_FF5 are blocking, i.e. are in a blocking state. If a measuring device is connected to the track 450, the measuring device may not be able to measure or detect any current transferred via track 450.

In order to now determine the amount of wear by, for example, a measuring device connected to track 450, the number of clock transitions may be counted until the output over the sequence of flip-flop elements FF1 to FF5 changes to zero ("0"), and preferably remains zero over a specific number of clocks. For example, if the specific number of clocks is one, the number of clock transitions is counted by using the detected current transferred by track 450 until the output of the sequence of flip-flop elements changes to zero in one clock. The counted number of clock transitions may then be compared to an expected number of clock transitions. If, however, the specific number of clocks is greater than one, the number of clock transitions is counted until the output of the sequence of flip-flop elements is zero over the specific number of subsequent clocks. For example, if the specific number of clocks is three, the number of clock transitions is counted until the output of the sequence of flip-flop elements is zero over three subsequent clocks. By observing a specific number of subsequent clocks and stopping the clock transition counting when the output of the sequence of flip-flop elements is zero over the specific number of clocks, a correct wear amount measurement is ensured even if errors with regard to the flip-flop elements occur. For example, if D_FF2 in Fig. 7A does not properly work and thus does not transfer a high signal to the output via track 450 but D_FF3 then correctly transfers a high signal to the output via track 450 and if the specific number of subsequent clocks is set to a value greater than one, the clock transition count is not stopped even though the output of the sequence of flip-flop elements briefly changes to zero due to the error in D_FF2.

Thus, the wear sensor may also be configured to detect whether or not an error with regard to at least one flip-flop element of the sequence of flip-flop elements has occurred. For example, an error in a diode, as explained above, an error regarding signal transmissions via the tracks, or an error in the flip-flop element itself may occur. Furthermore, the wear sensor may not only detect whether or not an error has occurred but may also detect a position within the electrical current at which the error has occurred. For example, by regarding the output of the sequence of flip-flop elements in combination with the clock signal or clock transitions, it can be determined when the output of the sequence of flip-flop elements briefly changes to "0" and back to "1" and thus which flip-flop element may be affected by the error. By knowing the exact error position, the electrical circuit of the wear sensor can be easily repaired in a fast way.

For example, if during manufacturing 70 flip-flop elements are connected to form the wear sensor, the expected number of clock transitions is 70. Compared to a conventional resistor-based design (as shown in Fig. 1) having 70 individual resistor, the overall measurement time is less than 0.1 seconds and thus significantly reduced. When the counted number of clock transitions is less than the expected number of clock transitions, for example less than 70 clock transitions, it is determined that wear has occurred to the wear sensor and some of the flip-flop elements were electrically decoupled by action of wear.

In Fig. 7A, the number of clock transitions is five and thus it is possible to determine that five flip-flop elements are still present in the electrical circuit of the wear sensor. If, during manufacturing, for example in total 10 flip-flop elements have been connected to form the electrical circuit of the wear sensor and now it is determined that only five flip-flop elements are left, the amount of wear can be determined using the information about the distance or spacing between the flip-flop elements together with the information that five flip-flop elements are no longer present, i.e. are missing, in the electrical circuit due to, for example, electrically decoupling by action of wear. The number of missing flip-flops can be, for example, converted to a measure of length, a percentage value, or the like to determine the amount of wear occurred to the object, like a wear plate, wear liner, or the like.

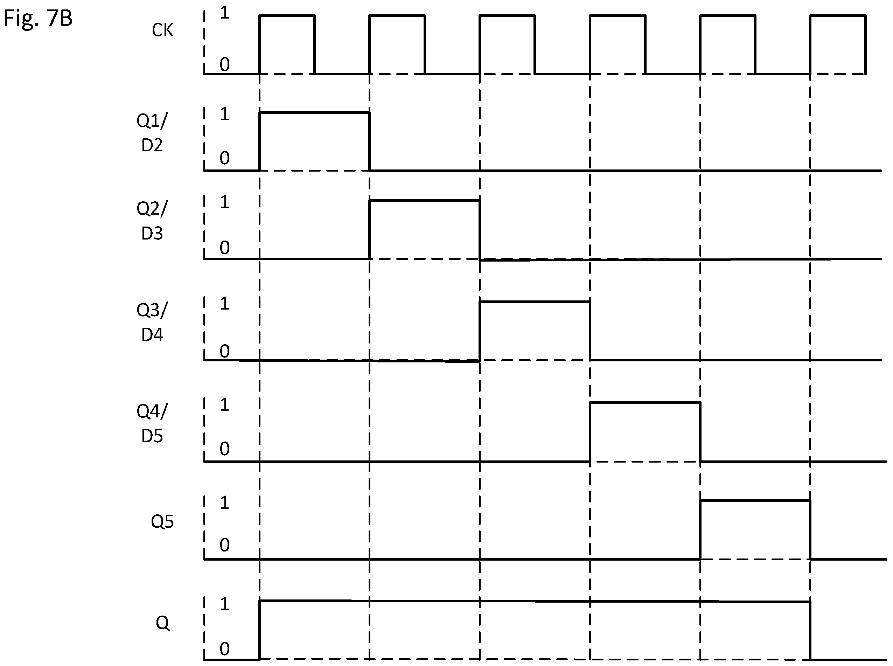

Fig. 7B shows signal-time diagrams with regard to Fig. 7A. It shows a diagram for the clock signal CK and the output signals for each flip-flop element FF1, FF2, FF3, FF4, and FF5. Q1 is the output of FF1, Q2 is the output of FF2, Q3 is the output of FF3, Q4 is the output of FF4, and Q5 is the output of FF5. Q is the overall output of the sequence of flip-flop elements at track 450. D2 is the input of FF2, D3 is the input of FF3, D4 is the input of FF4, and D5 is the input of FF5. As can be seen in the signal-time diagrams, an output signal representing a digital data value of "1" is shifted from one flip-flop element to a subsequent flip-flop element with the rising edge of the clock signal CK. For the overall output, the output signals of all flip-flop elements FF1 to FF5 are summed. In order to determine the amount of wear, the number of clock transitions may be counted until the output over the sequence of flip-flop elements FF1 to FF5 changes to zero, preferably over a specific number of clocks.

As described above, the amount of wear may be determined by a measuring device or measuring unit connected to track 450. The measuring device and the electrical circuit may form the wear sensor, or the wear sensor may only comprise the electrical circuit, wherein the measuring device and the wear sensor comprising the electrical circuit form a wear sensing system.

However, it is also possible that a sensor comprising a transmitting unit is connected to track 450 which senses current transferred via track 450 and transmits data necessary for wear detection and measurement to an external device, i.e. to a device external to the wear sensor. The external device may then detect or measure the amount of wear. The external device is connected either wirelessly or with wire to the wear sensor.

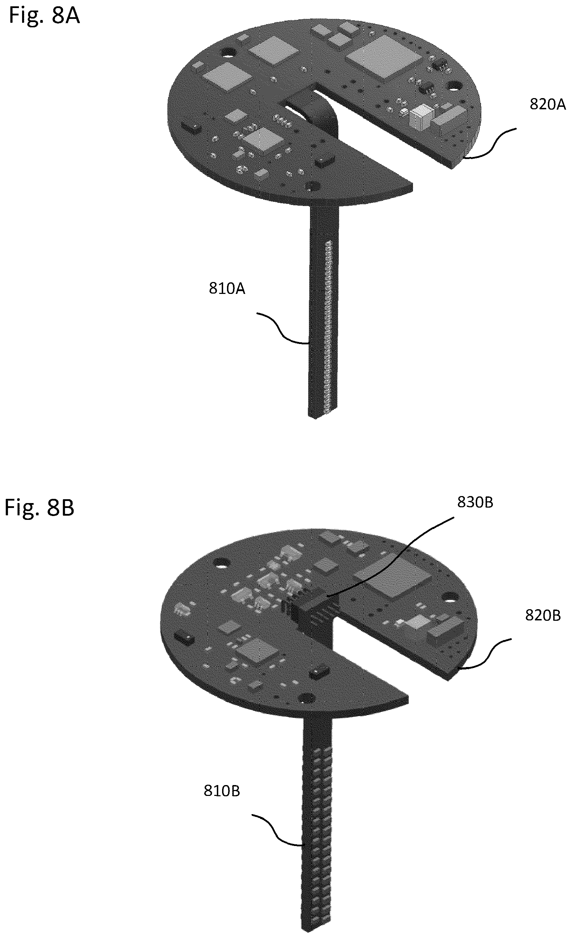

As described above, as the amount of tracks is independent of the total number of flip-flop elements included in the sequence, the dimension of the electrical circuit and the wear sensor can be minimized. This is also advantageous for the design of printed circuit boards (PCB) as shown in Figs. 8A and 8B.

Figs. 8A and 8B show printed circuit board (PCB) designs in combination with wear sensors. Fig. 8A shows a PCB design of a PCB 820A with a conventional wear sensor comprising, for example, resistors as also described with reference to Fig. 1. Fig 8B shows a PCB design of a PCB 820B with a wear sensor according to an embodiment of the present invention as described with reference to Figs. 2 to 7.

As in the wear sensor 810A of Fig. 8A, the amount of tracks depends on the amount of resistors used for measurement points, the dimension of the wear sensor 810A and the electrical circuit may dramatically increase. For example, usually up to 70 resistors are used in one wear sensor 810A resulting in about 71 tracks for the wear sensor. Due to the large amount of tracks in the wear sensor 810A, a rigid PCB 820A is required.

However, by using a wear sensor 810B as shown in Fig. 8B, the wear sensor 810B being a wear sensor according to an embodiment of the present invention, the amount of tracks is independent of the total number of flip-flop elements included in the sequence. Thus, even though, for example, 70 flip-flop elements are connected to form the wear sensor 810B, the number of tracks per electrical circuit remains five (see also description with regard to Figs. 4A and 4B). Thus, the dimension of the wear sensor 810B is minimized allowing standard PCB technologies to be easily used. Furthermore, due to the small amount of tracks per electrical circuit in the wear sensor 810B, a small connector 830B can be used to connect the wear sensor 810B to the PCB 820B.

According to another embodiment, the wear sensor as described above may further comprise at least one additional electrical circuit such that the wear sensor comprises two or more electrical circuits. The two or more electrical circuits may be independent of each other. The two or more electrical circuits may be connected in parallel, as also shown in Fig. 8B, in particular in wear sensor 810B which comprises two parallel electrical circuits on a substrate. The two or more electrical circuits may be either identical in structure or non-identical in structure.

As the dimension of the electrical circuit can be minimized by the reduced number of tracks used in the electrical circuit, more than one electrical circuit can be included in the wear sensor, leading to redundancy. Thus, even when outage or problems in one electrical circuit occur, the wear sensor can still ensure proper and correct wear measurements due to the redundancy. Thus, failure rates with regard to wear sensors can be reduced.

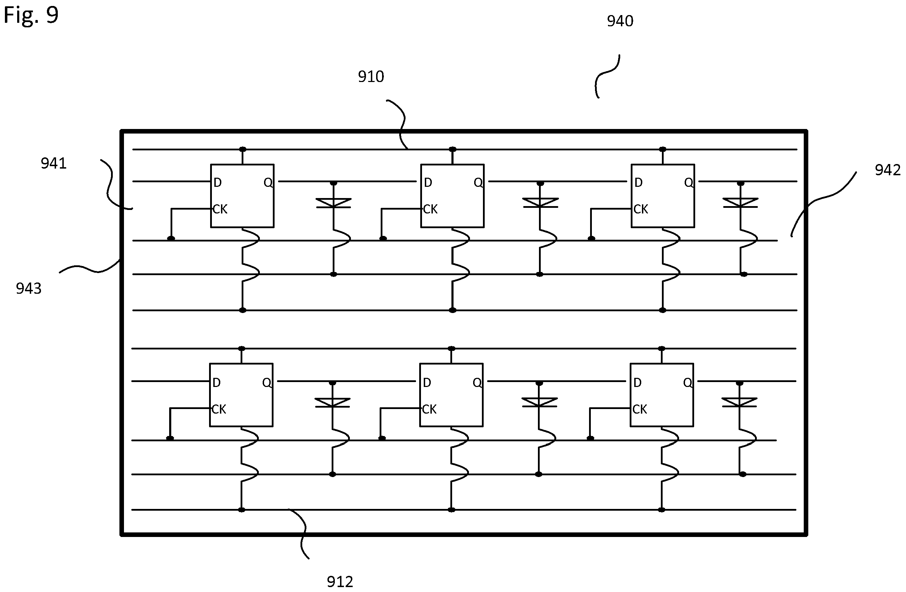

Fig. 9 shows electrical circuits of a wear sensor on a substrate according to an embodiment. As shown in Fig. 9, a wear sensor 940 may comprise a substrate 943, wherein two electrical circuits 910 and 912 are positioned on the substrate 943. The substrate may be a substrate described with regard to Fig. 6 or Fig. 8B. The electrical circuits 910 and 912 may be electrical circuits described above with regard to any embodiment. In Fig. 9, the electrical circuits 910 and 912 are identical in structure; however, the electrical circuits 910 and 912 may be non-identical in structure and may, for example, comprise different number of flip-flop elements or the like. The substrate 943 may be positioned in a chute or a wear plate, for example as shown in Fig. 3, in the direction of the thickness of the wear plate to detect wear occurring to the wear plate due to, for example, heavy and hard rocks. A first edge 941 of the wear sensor may be directed outward of the chute or any other object subject to wear, as also shown in Fig. 3, and a second edge 942 of the wear sensor may be directed inward of the chute or any other object subject to wear. The second edge 942 of the wear sensor being directed inward may be subject to wear, wherein a flip-flop element towards the second edge 942 may be electrically decoupled from the electrical circuit in the direction of the first edge 941 by action of wear occurring to the wear sensor.

In Fig. 9, the two electrical circuits 910 and 912 are placed in parallel on one side of the substrate 843. However, according to another embodiment, one of the electrical circuits may be placed on the front side of the substrate 943 while the other electrical circuit is placed on the back side of the substrate 943.

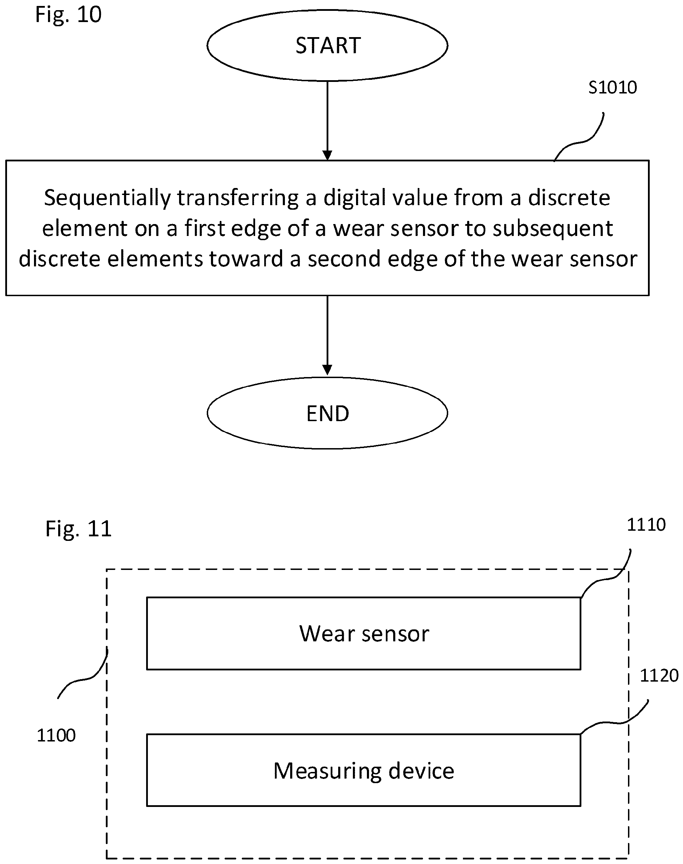

Fig. 10 shows a method for sensing wear occurring to an object according to an embodiment. The method may comprise sequentially transferring (S1010) a digital value from a first discrete element on a first edge of a wear sensor to subsequent discrete elements toward a second edge of the wear sensor. The wear sensor may be a wear sensor according to any embodiment described with regard to Figs. 2 to 9. For example, the wear sensor comprises an electrical circuit, wherein the electrical circuit comprises a sequence of discrete elements, each discrete element temporarily holding the digital data value. A discrete element may be electrically decoupled from the sequence of discrete elements, sequentially in a direction from the second edge, by action of wear on the wear sensor, wherein a number of discrete elements in the sequence is reduced when wear occurs on the wear sensor.

Fig. 11 shows a wear sensing system according to an embodiment. The wear sensing system 1100 may comprise one or more wear sensors 1110 according to any embodiment described with regard to Figs. 2 to 9 and a measuring device 1120. The measuring device may measure an amount of wear occurring to an object based on the one or more wear sensors. The measuring device 1120 may be a measuring device as described above.

The wear sensing system may either be implemented by a single device (see dashed lines) or may be implemented in a distributed way. If the wear sensing system is implemented in a distributed way, the wear sensor 1110 and the measuring device 1120 may be implemented as separate devices or units, wherein the wear sensor 1110 may transmit, to the measuring device 1120 either wirelessly or via a wire, all the data and information necessary for the measuring device to measure the amount of wear occurring to the object. In order to transmit the necessary data and information, the wear sensor 1110 may additionally comprise a transmitting unit (not shown), while the measuring device 1120 may comprise a receiving unit (not shown) to be able to receive the necessary data and information.

According to an embodiment, the measuring device 1120 may be a counter configured to count a number of clocks until an output of the one or more wear sensors is a digital data value of "0" over a specific number of clocks. For further details regarding the output of the wear sensor, in particular the output over the sequence of flip-flop elements, it is referred to Figs. 7A and 7B described above.

The wear sensor as described with Figs. 2 to 11 may be included in any equipment that is subject to wear. For example, the wear sensor is included in a wear plate, a wear liner, a wear bar, or the like, wherein the wear plate, wear liner, wear bar, or the like is placed onto an equipment or plant subject to wear. For example, the equipment or plant subject to wear is an equipment or plant used in the mining industry, like a chute.

According to another embodiment, the wear sensor may be directly included in a housing, wall, bottom, or the like of a plant or equipment which is subject to wear. For example, the wear sensor is included directly in the wall of a chute used in the mining industry or any other equipment used in the mining industry that is subject to wear.

The invention has been described in relation to particular embodiments and examples which are intended in all aspects to be illustrative rather than restrictive. Those skilled in the art will appreciate that many different combinations of hardware, software and/or firmware will be suitable for practicing the present invention.

Moreover, other implementations of the invention will be apparent to those skilled in the art from consideration of the specification and practice of the invention disclosed herein. It is intended that the specification and the examples be considered as exemplary only. To this end, it is to be understood that inventive aspects lie in less than all features of a single foregoing disclosed implementation or configuration. Thus, the true scope of the invention is indicated by the following claims.

## Claims

1. A wear sensor (200, 340, 640, 810B, 940), comprising:
an electrical circuit (400, 610, 910, 912) comprising a sequence of discrete elements (210, 211, 212, 213, 214), each discrete element (210, 211, 212, 213, 214) Z is adapted to temporarily hold a digital data value, wherein the electrical circuit (400, 610, 910, 912) is configured to sequentially transfer the digital data value from a first discrete element (210) on a first side (220, 341, 641) of the wear sensor (200, 340, 640, 810B, 940) to subsequent discrete elements (211, 212, 213, 214) toward a second side (230, 342, 642) of the wear sensor (200, 340, 640, 810B, 940),
each discrete element (210, 211, 212, 213, 214) being configured to be electrically decoupled from the electrical circuit (400, 610, 910, 912), sequentially in a direction from the second side (230, 342, 642) to the first side (220, 341, 641), by action of wear on the wear sensor (200, 340, 640, 810B, 940), wherein Z the wear sensor (200, 340, 640, 810B, 940) is arranged such that a number of discrete elements (210,
211, 212, 213, 214) in the sequence is reduced when wear occurs on the wear sensor (200, 340, 640, 810B, 940) and
the reduced number of discrete elements (210, 211, 212, 213, 214) indicates an amount of wear.

2. The wear sensor (200, 340, 640, 810B, 940) according to claim 1, further
comprising a substrate (643, 943) capable of being disposed along a path subject to wear,
wherein the electrical circuit (400, 610, 910, 912) is supported by the substrate (643, 943).

3. The wear sensor (200, 340, 640, 810B, 940) according to claim 2,
wherein the discrete elements (210, 211, 212, 213, 214) are placed in series on the substrate (643, 943) such that the discrete elements (210, 211, 212, 213, 214) are sequentially decoupled from the substrate (643, 943) as a wear progresses along the path.

4. The wear sensor (200, 340, 640, 810B, 940) according to any one of claims 1 to 3, wherein the discrete elements (210, 211, 212, 213, 214) are equally spaced in the electrical circuit (400, 610, 910, 912).

5. The wear sensor (200, 340, 640, 810B, 940) according to any one of claims 1 to 4, wherein the discrete elements (210, 211, 212, 213, 214) are flip-flop elements (410) and the sequence of flip-flop elements (410) is a flip-flop array or shift register.

6. The wear sensor (200, 340, 640, 810B, 940) according to claim 5, wherein flip-flop elements (410) are configured to shift their digital data value forward at each clock cycle.

7. The wear sensor (200, 340, 640, 810B, 940) according to any one of claims 5 - 6, wherein the electrical circuit (400, 610, 910, 912) comprises a specific amount of tracks, the specific amount of tracks being independent of the total number of flip-flop elements included in the sequence.

8. The wear sensor (200, 340, 640, 810B, 940) according to claim 7, wherein the electric circuit comprises five tracks, the five tracks being a track (420) for a power signal, a track (440) for a clock signal, a track (430) for an input signal, the track (450) for the output signal, and a track (460) connected to ground.

9. The wear sensor (200, 340, 640, 810B, 940) according to any one of claims 5 to 8, wherein the wear sensor is arranged such that the amount of wear can be determined based on a number of clock transitions between the flip-flop elements (410) in the sequence until the output over the sequence of flip-flop elements is a digital data value of zero, preferably over a specific number of clocks.

10. The wear sensor (200, 340, 640, 810B, 940) according to claim 9,
wherein the wear sensor (200, 340, 640, 810B, 940) is configured to detect whether or not an error with regard to at least one flip-flop element (410) of the sequence of flip-flop elements (410) has occurred.

11. The wear sensor (200, 340, 640, 810B, 940) according to claim 10,
wherein the wear sensor (200, 340, 640, 810B, 940) is further configured to detect a position within the electrical current at which the error has occurred.

12. The wear sensor (200, 340, 640, 810B, 940) according to any one of claims 1 to 11, further comprising an additional electrical circuit such that the wear sensor (940) comprises two electrical circuits (910, 912), the two electrical circuits (910, 912) being independent of each other.

13. The wear sensor (200, 340, 640, 810B, 940) according to claim 12,
wherein the two electrical circuits (910, 912) are connected in parallel.

14. A method for sensing wear occurring to an object, the method comprising:
sequentially transferring (S1010) a digital data value from a first discrete element (210) on a first side (220, 341, 641) of a wear sensor (200, 340, 640, 810B, 940) to subsequent discrete elements (211, 212, 213, 214) toward a second side (230, 342, 642) of the wear sensor (200, 340, 640, 810B, 940);
wherein the wear sensor (200, 340, 640, 810B, 940) comprises an electrical circuit (400, 610, 910, 912),
the electrical circuit (400, 610, 910, 912) comprises a sequence of discrete elements (210, 211, 212, 213, 214), each discrete element (210, 211, 212, 213, 214) temporarily holding the digital data value, and
a discrete element (210, 211, 212, 213, 214) is electrically decoupled from the sequence of discrete elements (210, 211, 212, 213, 214), sequentially in a direction from the second side (230, 342, 642) to the first side (220, 341, 641), by action of wear on the wear sensor (200, 340, 640, 810B, 940), wherein a number of discrete elements (210, 211, 212, 213, 214) in the sequence is reduced when wear occurs on the wear sensor (200, 340, 640, 810B, 940) and wherein the reduced number of discrete elements (210, 211, 212, 213, 214) indicates an amount of wear.

15. A wear sensing system comprising:
one or more wear sensors (200, 340, 640, 810B, 940) according to any one of claims 1 to 13; and
a measuring device configured to measure an amount of wear occurring to an object based on the one or more wear sensors (200, 340, 640, 810B, 940).

16. The wear sensing system of claim 15,
wherein the measuring device is a counter configured to count a number of clocks until an output of the one or more wear sensors (200, 340, 640, 810B, 940) is a digital data value of zero over a specific number of clocks.

17. An equipment subject to wear, comprising:
a wear sensor (200, 340, 640, 810B, 940) according to any one of claims 1 to 13.

## Patentansprüche

1. Verschleißsensor (200, 340, 640, 810B, 940), umfassend:
eine elektrische Schaltung (400, 610, 910, 912), die eine Sequenz von diskreten Elementen (210, 211, 212, 213, 214) umfasst, wobei jedes diskrete Element (210, 211, 212, 213, 214) dazu ausgelegt ist, vorübergehend einen digitalen Datenwert zu halten, wobei die elektrische Schaltung (400, 610, 910, 912) konfiguriert ist, um den digitalen Datenwert sequentiell von einem ersten diskreten Element (210) auf einer ersten Seite (220, 341, 641) des Verschleißsensors (200, 340, 640, 810B, 940) zu nachfolgenden diskreten Elementen (211, 212, 213, 214) in Richtung einer zweiten Seite (230, 342, 642) des Verschleißsensors (200, 340, 640, 810B, 940) zu übertragen,
wobei jedes diskrete Element (210, 211, 212, 213, 214) konfiguriert ist, um von der elektrischen Schaltung (400, 610, 910, 912) sequentiell in einer Richtung von der zweiten Seite (230, 342, 642) zu der ersten Seite (220, 341, 641) durch die Wirkung von Verschleiß auf den Verschleißsensor (200, 340, 640, 810B, 940) elektrisch entkoppelt zu werden, wobei der Verschleißsensor (200, 340, 640, 810B, 940) so angeordnet ist, dass eine Anzahl von diskreten Elementen (210, 211, 212, 213, 214) in der Sequenz reduziert wird, wenn Verschleiß am Verschleißsensor (200, 340, 640, 810B, 940) auftritt, und
die verringerte Anzahl diskreter Elemente (210, 211, 212, 213, 214) einen Grad des Verschleißes anzeigt.

2. Verschleißsensor (200, 340, 640, 810B, 940) nach Anspruch 1, weiter umfassend ein Substrat (643, 943), das entlang eines Verschleißwegs angeordnet werden kann,
wobei die elektrische Schaltung (400, 610, 910, 912) von dem Substrat (643, 943) getragen wird.

3. Verschleißsensor (200, 340, 640, 810B, 940) nach Anspruch 2,
wobei die diskreten Elemente (210, 211, 212, 213, 214) in Reihe auf dem Substrat (643, 943) angeordnet sind, so dass die diskreten Elemente (210, 211, 212, 213, 214) bei Fortschreiten eines Verschleißes entlang des Weges sequentiell vom Substrat (643, 943) entkoppelt werden.

4. Verschleißsensor (200, 340, 640, 810B, 940) nach einem der Ansprüche 1 bis 3,
wobei die diskreten Elemente (210, 211, 212, 213, 214) in der elektrischen Schaltung (400, 610, 910, 912) gleichmäßig beabstandet sind.

5. Verschleißsensor (200, 340, 640, 810B, 940) nach einem der Ansprüche 1 bis 4,
wobei die diskreten Elemente (210, 211, 212, 213, 214) Flip-Flop-Elemente (410) sind und die Sequenz von Flip-Flop-Elementen (410) ein Flip-Flop-Array oder Schieberegister ist.

6. Verschleißsensor (200, 340, 640, 810B, 940) nach Anspruch 5, wobei Flip-Flop-Elemente (410) konfiguriert sind, um ihren digitalen Datenwert bei jedem Taktzyklus vorwärts zu verschieben.

7. Verschleißsensor (200, 340, 640, 810B, 940) nach einem der Ansprüche 5-6,
wobei die elektrische Schaltung (400, 610, 910, 912) eine bestimmte Anzahl von Spuren umfasst, wobei die bestimmte Anzahl von Spuren unabhängig von der Gesamtzahl der in der Sequenz eingeschlossenen Flip-Flop-Elemente ist.

8. Verschleißsensor (200, 340, 640, 810B, 940) nach Anspruch 7, wobei die elektrische Schaltung fünf Spuren umfasst, wobei die fünf Spuren eine Spur (420) für ein Leistungssignal, eine Spur (440) für ein Taktsignal, eine Spur (430) für ein Eingangssignal, die Spur (450) für das Ausgangssignal und eine mit Masse verbundene Spur (460) sind.

9. Verschleißsensor (200, 340, 640, 810B, 940) nach einem der Ansprüche 5 bis 8, wobei der Verschleißsensor so angeordnet ist, dass der Grad des Verschleißes auf der Grundlage einer Anzahl von Taktübergängen zwischen den Flip-Flop-Elementen (410) in der Sequenz bestimmt werden kann, bis die Ausgabe über die Sequenz von Flip-Flop-Elementen ein digitaler Datenwert von Null ist, vorzugsweise über eine bestimmte Anzahl von Takten.

10. Verschleißsensor (200, 340, 640, 810B, 940) nach Anspruch 9,
wobei der Verschleißsensor (200, 340, 640, 810B, 940) konfiguriert ist, um zu ermitteln, ob ein Fehler in Bezug auf mindestens ein Flip-Flop-Element (410) der Sequenz von Flip-Flop-Elementen (410) aufgetreten ist oder nicht.

11. Verschleißsensor (200, 340, 640, 810B, 940) nach Anspruch 10,
wobei der Verschleißsensor (200, 340, 640, 810B, 940) weiter konfiguriert ist, um eine Position innerhalb des elektrischen Stroms zu ermitteln, an der der Fehler aufgetreten ist.

12. Verschleißsensor (200, 340, 640, 810B, 940) nach einem der Ansprüche 1 bis 11,
weiter umfassend eine zusätzliche elektrische Schaltung, so dass der Verschleißsensor (940) zwei elektrische Schaltungen (910, 912) umfasst, wobei die beiden elektrischen Schaltungen (910, 912) unabhängig voneinander sind.

13. Verschleißsensor (200, 340, 640, 810B, 940) nach Anspruch 12,
wobei die beiden elektrischen Schaltungen (910, 912) parallelgeschaltet sind.

14. Verfahren zum Erfassen von Verschleiß an einem Objekt, wobei das Verfahren umfasst:
sequentielles Übertragen (S1010) eines digitalen Datenwertes von einem ersten diskreten Element (210) auf einer ersten Seite (220, 341, 641) eines Verschleißsensors (200, 340, 640, 810B, 940) zu nachfolgenden diskreten Elementen (211, 212, 213, 214) in Richtung einer zweiten Seite (230, 342, 642) des Verschleißsensors (200, 340, 640, 810B, 940);
wobei der Verschleißsensor (200, 340, 640, 810B, 940) eine elektrische Schaltung (400, 610, 910, 912) umfasst,
die elektrische Schaltung (400, 610, 910, 912) eine Sequenz von diskreten Elementen (210, 211, 212, 213, 214) umfasst, wobei jedes diskrete Element (210, 211, 212, 213, 214) vorübergehend den digitalen Datenwert hält, und
ein diskretes Element (210, 211, 212, 213, 214) elektrisch von der Sequenz von diskreten Elementen (210, 211, 212, 213, 214) sequentiell in einer Richtung von der zweiten Seite (230, 342, 642) zur ersten Seite (220, 341, 641) durch die Wirkung von Verschleiß auf den Verschleißsensor (200, 340, 640, 810B, 940) entkoppelt wird, wobei eine Anzahl von diskreten Elementen (210, 211, 212, 213, 214) in der Sequenz verringert wird, wenn Verschleiß an dem Verschleißsensor (200, 340, 640, 810B, 940) auftritt, und wobei die verringerte Anzahl diskreter Elemente (210, 211, 212, 213, 214) einen Grad des Verschleißes anzeigt.

15. Verschleißerfassungssystem, umfassend:
einen oder mehrere Verschleißsensoren (200, 340, 640, 810B, 940) nach einem der Ansprüche 1 bis 13; und
eine Messvorrichtung, die konfiguriert ist, um auf der Grundlage des einen oder der mehreren Verschleißsensoren (200, 340, 640, 810B, 940) einen an einem Objekt auftretenden Verschleiß zu messen.

16. Verschleißerfassungssystem nach Anspruch 15,
wobei die Messvorrichtung ein Zähler ist, der konfiguriert ist, um eine Anzahl von Takten zu zählen, bis ein Ausgang des einen oder der mehreren Verschleißsensoren (200, 340, 640, 810B, 940) über eine bestimmte Anzahl von Takten ein digitaler Datenwert von Null ist.

17. Verschleiß unterworfene Ausrüstung, umfassend:
einen Verschleißsensor (200, 340, 640, 810B, 940) nach einem der Ansprüche 1 bis 13.

## Revendications

1. Capteur d'usure (200, 340, 640, 810B, 940), comprenant :
un circuit électrique (400, 610, 910, 912) comprenant une séquence d'éléments discrets (210, 211, 212, 213, 214), chaque élément discret (210, 211, 212, 213, 214) étant adapté pour conserver temporairement une valeur de données numériques, dans lequel le circuit électrique (400, 610, 910, 912) est configuré pour transférer de façon séquentielle la valeur de données numériques d'un premier élément discret (210) sur un premier côté (220, 341, 641) du capteur d'usure (200, 340, 640, 810B, 940) à des éléments discrets (211, 212, 213, 214) suivants vers un second côté (230, 342, 642) du capteur d'usure (200, 340, 640, 810B, 940),
chaque élément discret (210, 211, 212, 213, 214) étant configuré pour être découplé électriquement du circuit électrique (400, 610, 910, 912), de façon séquentielle dans une direction à partir du second côté (230, 342, 642) vers le premier côté (220, 341, 641), par une action d'usure sur le capteur d'usure (200, 340, 640, 810B, 940), dans lequel le capteur d'usure (200, 340, 640, 810B, 940) est agencé de sorte qu'un nombre d'éléments discrets (210, 211, 212, 213, 214) dans la séquence soit réduit lorsque l'usure se produit sur le capteur d'usure (200, 340, 640, 810B, 940) et
que le nombre réduit d'éléments discrets (210, 211, 212, 213, 214) indique une quantité d'usure.

2. Capteur d'usure (200, 340, 640, 810B, 940) selon la revendication 1, comprenant en outre un substrat (643, 943) capable d'être disposé le long d'un chemin sujet à l'usure,
dans lequel le circuit électrique (400, 610, 910, 912) est supporté par le substrat (643, 943).

3. Capteur d'usure (200, 340, 640, 810B, 940) selon la revendication 2,
dans lequel les éléments discrets (210, 211, 212, 213, 214) sont placés en série sur le substrat (643, 943) de sorte que les éléments discrets (210, 211, 212, 213, 214) soient découplés en séquence du substrat (643, 943) tandis qu'une usure progresse le long du chemin.

4. Capteur d'usure (200, 340, 640, 810B, 940) selon l'une quelconque des revendications 1 à 3,
dans lequel les éléments discrets (210, 211, 212, 213, 214) sont espacés de manière égale dans le circuit électrique (400, 610, 910, 912).

5. Capteur d'usure (200, 340, 640, 810B, 940) selon l'une quelconque des revendications 1 à 4,
dans lequel les éléments discrets (210, 211, 212, 213, 214) sont des éléments de bascule (410) et la séquence d'éléments de bascule (410) est un réseau de bascule ou un registre à décalage.

6. Capteur d'usure (200, 340, 640, 810B, 940) selon la revendication 5, dans lequel des éléments de bascule (410) sont configurés pour décaler leur valeur de données numériques vers l'avant à chaque cycle d'horloge.

7. Capteur d'usure (200, 340, 640, 810B, 940) selon l'une quelconque des revendications 5 et 6,
dans lequel le circuit électrique (400, 610, 910, 912) comprend une quantité spécifique de pistes, la quantité spécifique de pistes étant indépendante du nombre total d'éléments de bascule inclus dans la séquence.

8. Capteur d'usure (200, 340, 640, 810B, 940) selon la revendication 7, dans lequel le circuit électrique comprend cinq pistes, les cinq pistes étant une piste (420) pour un signal de puissance, une piste (440) pour un signal d'horloge, une piste (430) pour un signal d'entrée, la piste (450) pour le signal de sortie, et une piste (460) connectée à la masse.

9. Capteur d'usure (200, 340, 640, 810B, 940) selon l'une quelconque des revendications 5 à 8, dans lequel le capteur d'usure est agencé de telle sorte que la quantité d'usure puisse être déterminée sur la base d'un nombre de transitions d'horloge entre les éléments de bascule (410) dans la séquence jusqu'à ce que la sortie sur la séquence des éléments de bascule soit une valeur de données numériques de zéro, de préférence sur un nombre spécifique d'horloges.

10. Capteur d'usure (200, 340, 640, 810B, 940) selon la revendication 9,
dans lequel le capteur d'usure (200, 340, 640, 810B, 940) est configuré pour détecter si une erreur concernant au moins un élément de bascule (410) de la séquence d'éléments de bascule (410) s'est produite ou non.

11. Capteur d'usure (200, 340, 640, 810B, 940) selon la revendication 10,
dans lequel le capteur d'usure (200, 340, 640, 810B, 940) est en outre configuré pour détecter une position dans le courant électrique à laquelle l'erreur s'est produite.

12. Capteur d'usure (200, 340, 640, 810B, 940) selon l'une quelconque des revendications 1 à 11,
comprenant en outre un circuit électrique supplémentaire de sorte que le capteur (940) d'usure comprenne deux circuits (910, 912) électriques, les deux circuits (910, 912) électriques étant indépendants l'un de l'autre.

13. Capteur d'usure (200, 340, 640, 810B, 940) selon la revendication 12,
dans lequel deux circuits (910, 912) électriques sont connectés en parallèle.

14. Procédé de détection d'usure se produisant sur un objet, le procédé comprenant :
le transfert (S1010) de façon séquentielle d'une valeur de données numériques depuis un premier élément discret (210) sur un premier côté (220, 341, 641) d'un capteur d'usure (200, 340, 640, 810B, 940) à des éléments discrets (211, 212, 213, 214) suivants vers un second côté (230, 342, 642) du capteur d'usure (200, 340, 640, 810B, 940) ;
dans lequel le capteur d'usure (200, 340, 640, 810B, 940) comprend un circuit électrique (400, 610, 910, 912),
le circuit électrique (400, 610, 910, 912) comprend une séquence d'éléments discrets (210, 211, 212, 213, 214), chaque élément discret (210, 211, 212, 213, 214) conservant temporairement la valeur de données numériques, et
un élément discret (210, 211, 212, 213, 214) est découplé électriquement de la séquence d'éléments discrets (210, 211, 212, 213, 214) de façon séquentielle dans une direction à partir du second côté (230, 342, 642) vers le premier côté (220, 341, 641), par une action d'usure sur le capteur d'usure (200, 340, 640, 810B, 940), dans lequel un nombre d'éléments discrets (210, 211, 212, 213, 214) dans la séquence est réduit lorsque l'usure se produit sur le capteur d'usure (200, 340, 640, 810B, 940) et dans lequel le nombre réduit d'éléments discrets (210, 211, 212, 213, 214) indique une quantité d'usure.

15. Système de détection d'usure comprenant :
un ou plusieurs capteurs (200, 340, 640, 810B, 940) d'usure selon l'une quelconque des revendications 1 à 13 ; et
un dispositif de mesure configuré pour mesurer une quantité d'usure se produisant sur un objet sur la base des un ou plusieurs capteurs (200, 340, 640, 810B, 940) d'usure.

16. Système de détection d'usure selon la revendication 15,
dans lequel le dispositif de mesure est un compteur configuré pour compter un nombre d'horloges jusqu'à ce qu'une sortie des un ou plusieurs capteurs (200, 340, 640, 810B, 940) d'usure soit une valeur de données numériques de zéro sur un nombre spécifique d'horloges.

17. Équipement sujet à l'usure, comprenant :
un capteur d'usure (200, 340, 640, 810B, 940) selon l'une quelconque des revendications 1 à 13.
